# EUROPEAN PATENT APPLICATION

(11) **EP 4 712 607 A1**
(43) Date of publication of application: **18.03.2026**
(21) Application number: 23936871.5
(22) Date of filing: 12.05.2023
(51) Int. Cl.: H04W 64/00

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/094041
(87) International publication number: WO 2024/234178

(57) **Abstract**

Embodiments of the present disclosure provide an information processing method and apparatus, a communication device, and a storage medium. The method executed by a sender comprises: sending a sidelink positioning protocol (SLPP) message, wherein the SLPP message comprises a first session identifier, and the first session identifier is used for identifying a session and determining an initiator of the session.

## Description

### FIELD

The present disclosure relates to, but is not limited to, the field of wireless communication technologies, and more particularly to an information processing method, an information processing apparatus, a communication device and a storage medium.

### BACKGROUND

Positioning between user equipment (UE) and UE may be realized through a sidelink (SL). The positioning includes absolute positioning, relative positioning and ranging. The absolute positioning means determining an absolute coordinates of the UE, the relative positioning means determining a coordinates of the UE relative to a reference point, and the ranging means determining a distance and/or an angle of the UE relative to a reference point. The ranging usually only involves ranging between two UEs, but the absolute positioning and the relative positioning may involve multiple UEs to participate in positioning. The UE needs to request positioning based on a session.

### SUMMARY

Embodiments of the present disclosure provide an information processing method, an information processing apparatus, a communication device and a storage medium.

An embodiment of a first aspect of the present disclosure provides an information processing method, which is performed by a sender, and includes: sending a sidelink positioning protocol (SLPP) message, where the SLPP message includes a first session identifier, and the first session identifier is configured to identify a session and determine an initiator of the session.

An embodiment of a second aspect of the present disclosure provides an information processing method, which is performed by a receiver, and includes: receiving a sidelink positioning protocol (SLPP) message, where the SLPP message includes a first session identifier, and the first session identifier is configured to identify a session and determine an initiator of the session.

An embodiment of a third aspect of the present disclosure provides an information processing apparatus, which includes: a sending module configured to send a sidelink positioning protocol (SLPP) message, where the SLPP message includes a first session identifier, and the first session identifier is configured to identify a session and determine an initiator of the session.

An embodiment of a fourth aspect of the present disclosure provides an information processing apparatus, which includes: a receiving module configured to receive a sidelink positioning protocol (SLPP) message, where the SLPP message includes a first session identifier, and the first session identifier is configured to identify a session and determine an initiator of the session.

An embodiment of a fifth aspect of the present disclosure provides a communication device, which includes a processor, a transceiver, a memory and an executable program stored in the memory and configured to be executed by the processor, where the processor is configured to perform the information processing method provided in the first aspect or the second aspect when executing the executable program.

An embodiment of a sixth aspect of the present disclosure provides a computer storage medium, for storing an executable program which, when executed by a processor, is configured to cause the processor to perform the information processing method provided in the first aspect or the second aspect.

According to the technical scheme provided by the embodiment of the present disclosure, the session identifier of the session and the initiator of the session may be determined according to the SLPP message carrying the first session identifier, so that the situation that the initiator of the session cannot be distinguished when a plurality of participants participate in the session, or the initiators determined by different participants of the same session are different may be reduced, thus improving the accuracy of information interaction during the session. Since the initiator of the session may be distinguished more accurately according to the first session identifier, the SLPP message carrying the first session identifier may be used for positioning, so as to improve the positioning accuracy.

It should be understood that the above general description and the following detailed description are only illustrative and explanatory, and cannot limit the embodiments of the present disclosure.

### BRIEF DESCRIPTION OF THE DRAWINGS

The accompanying drawings, which are incorporated in and constitute a part of this specification, illustrate embodiments consistent with the present disclosure, and together with the description, serve to explain the principles of the embodiments of the present disclosure.
Fig. 1A is a schematic diagram of a wireless communication system according to an illustrative embodiment.
Fig. 1B is a schematic diagram of a positioning frame according to an illustrative embodiment.
Fig. 2A is a flowchart of an information processing method according to an illustrative embodiment.
Fig. 2B is a flowchart of an information processing method according to an illustrative embodiment.
Fig. 2C is a flowchart of an information processing method according to an illustrative embodiment.
Fig. 3A is a flowchart of an information processing method according to an illustrative embodiment.
Fig. 3B is a flowchart of an information processing method according to an illustrative embodiment.
Fig. 3C is a flowchart of an information processing method according to an illustrative embodiment.
Fig. 3D is a flowchart of an information processing method according to an illustrative embodiment.
Fig. 4A is a flowchart of an information processing method according to an illustrative embodiment.
Fig. 4B is a flowchart of an information processing method according to an illustrative embodiment.
Fig. 5A is a schematic diagram of a terminal according to an illustrative embodiment.
Fig. 5B is a schematic diagram of a network device according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all the implementations consistent with the embodiments of the present disclosure. Rather, they are merely examples of apparatuses and methods consistent with some aspects of embodiments of the present disclosure.

The terms used in the embodiments of the present disclosure are for the purpose of describing specific embodiments only, and are not intended to limit the embodiments of the present disclosure. The singular forms "a", "an" and "the" used in the present disclosure are also intended to include the plural forms, unless the context clearly indicates other meaning. It should also be understood that the term "and/or" as used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first information may also be called the second information, and similarly, the second information may also be called the first information. Depending on the context, the word "if" as used herein may be interpreted as "when" or "while" or "in response to determining".

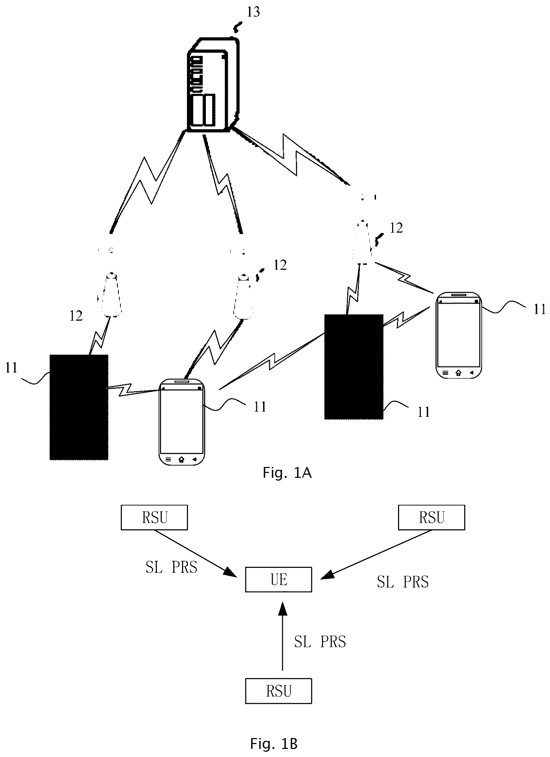

Fig. 1A shows a schematic diagram of a wireless communication system provided by an embodiment of the present disclosure. As shown in Fig. 1A, the wireless communication system is a communication system based on cellular mobile communication technology, which may include a plurality of UE 11, one or more access devices 12 and one or more core network devices 13.

The UE 11 may be a device that provides voice and/or data connectivity to a user. The UE 11 may communicate with one or more core networks via a radio access network (RAN). The UE 11 may be an Internet of Things UE, such as a sensor device, a mobile phone (or a "cellular" phone) and a computer with an Internet of Things UE. For example, it may be a fixed, portable, pocket-sized, handheld, computer-built or vehicle-mounted device, such as a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle. Alternatively, the UE 11 may also be a vehicle-mounted device, for example, a driving computer with a wireless communication function, or a wireless communication device externally connected to a driving computer. Alternatively, the UE 11 may also be a roadside device, such as a street lamp, a signal lamp or other roadside devices with a wireless communication function.

The access device 12 may be a network-side device in the wireless communication system. The wireless communication system may be the 4th generation mobile communication (4G) system, also known as a long term evolution (LTE) system. Alternatively, the wireless communication system may also be a 5G system, also known as a new radio (NR) system or a 5G NR system. Alternatively, the wireless communication system may also be a next generation system of the 5G system or a MTC system. The access network in the 5G system may be called a new generation-radio access network (NG-RAN).

The access device 12 may be an evolved access device (eNB) adopted in the 4G system. Alternatively, the access device 12 may also be an access device (gNB) adopting a central-distributed architecture in the 5G system. When the access device 12 adopts the central-distributed architecture, it usually includes a central unit (CU) and at least two distributed units (DUs). A protocol stack of a packet data convergence protocol (PDCP) layer, a radio link control (RLC) layer and a media access control (MAC) layer is arranged in the central unit; and a physical (PHY) layer protocol stack is arranged in the distributed unit. The embodiments of the present disclosure do not limit the specific implementation of the access device 12.

A wireless connection may be established between the access device 12 and the UE 11 through a radio air interface. In different embodiments, the radio air interface is a radio air interface based on the 4th generation (4G) mobile communication network technology standard; alternatively, the radio air interface is a radio air interface based on the 5th generation (5G) mobile communication network technology standard, for example, the radio air interface is the new radio air interface; alternatively, the radio air interface may also be a radio air interface based on the technology standard of the next generation mobile communication network of the 5G.

The core network device 13 may be connected with the access device 12. The typical core network device may include, but is not limited to: an access management function (AMF), a session management function (SMF), a user data management (UDM) and a policy control function (PCF).

Fig. 1B shows a schematic diagram of a positioning frame based on downlink time difference of arrival (DL-TDOA) provided by an embodiment of the present disclosure.

As shown in Fig. 1B, by measuring a plurality of road side units (RSUs, three or more RSUs) and through a sidelink positioning reference signal (SL PRS), the UE may determine a specific position of the UE relative to the RSUs. Besides DL-TDOA, positioning schemes also include uplink time difference of arrival (UL-TDOA), multiple round trip time (Multiple RTT), angle-of-arrival (AOA) or angle-of-departure (AOD), carrier phase positioning and so on. If the positioning result is not converted into absolute position coordinates based on absolute position information such as global positioning system (GPS) information of the RSUs, the positioning result is relative positioning. Conversely, it is absolute positioning. The UE to be positioned is a target UE, and other UEs supporting the positioning of the target UE are anchor UEs.

If only two UEs are involved in positioning, each of the two UEs is the other's anchor UE.

There are different types of anchor UEs, such as an anchor UE of a RSU type, which belongs to an infrastructure and may provide positioning services by cooperating with other RSUs. For example, an ordinary UE may also serve as an anchor UE, but it is difficult for the ordinary UE to cooperate with other UEs to provide positioning services. In addition, some anchor UEs have position information such as GPS information, which may assist other UEs in absolute positioning. Some other anchor UEs may not have position information such as GPS information.

The protocol of exchanging positioning messages between two UEs includes sidelink positioning protocol (also called sidelink LPP (SLPP)) or ranging and sidelink positioning protocol (RSPP). At present, the 3rd generation partnership project (3GPP) has not determined whether the SLPP or the RSPP is located above PC5-signalling (PC5-S), PC5 user plane (PC5-U), and PC5 radio resource control (PC5-RRC), or above a packet data convergence protocol (PDCP) layer of a control plane.

When the UE requests positioning, it needs to be done through a session, for example, creating a long term evolution (LTE) positioning protocol (LPP) session. One LPP session generally involves two nodes, such as one UE and one location management function (LMF). The LPP session distinguishes a session initiator by a node type in a session ID. For example, the session ID indicates that the initiator is a server-type node, or the session ID indicates that the initiator is a client-type node. This session mode supports the case that a numeric count of nodes is two. If the numeric count of nodes exceeds two, the initiator cannot be distinguished by the node type. For example, when one session includes two UEs and one LMF, if the session ID indicates that the node whose node type is client is the initiator of the session, this initiator may refer to either of the two UEs.

For a session with more than two nodes, there may be two or more other participants besides the initiator of the session.

When a numeric count of participants is more than two, the session ID in the LPP session cannot simply use the server or client to distinguish the initiator. Moreover, in some scenarios, besides the initiator, other participants also need to be taken into account.

In addition, for the LPP session, multiple transactions are supported in one session, but since the LPP session only involves two nodes, the session is considered to be over when a last transaction in the session is ended. However, in the sidelink positioning protocol (SLPP), more than three participants may participate in one session, and transactions may be established between different participants of the same session. At this time, one participant cannot determine whether the last transaction is ended. Therefore, it is also necessary to consider how to end a multi-participant session.

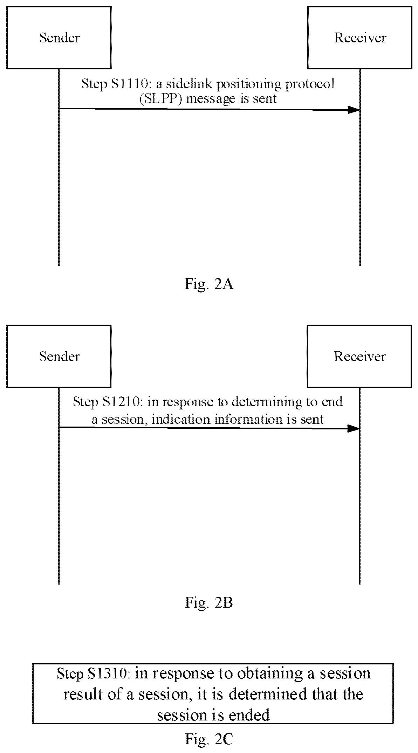

As shown in Fig. 2A, an embodiment of the present disclosure provides an information processing method, which is performed by a sender, and includes the following step.

In step S1110, a sidelink positioning protocol (SLPP) message is sent, where the SLPP message includes a first session identifier, and the first session identifier is configured to identify a session and determine an initiator of the session.

For example, the sender may be the initiator of the session, and/or a participant other than the initiator of the session.

For example, the participant includes user equipment (UE), a road side unit (RSU), etc.

In some embodiments, the initiator of the session may be a target UE that needs to be positioned, and the participant other than the initiator may be an anchor UE that provides positioning services.

In some embodiments, the initiator of the session may be an anchor UE, and another participant other than the initiator may be a target UE that needs to be positioned.

In some embodiments, all participants of the session are UEs. In some other embodiments, some participants of the session may include, but are not limited to, RSUs.

In some embodiments, step S1110 includes that UE A sends a sidelink positioning protocol (SLPP) message to UE B. UE B may include one or more UEs.

In some embodiments, the SLPP message may be a message during session creation. For example, the SLPP message may include a session creation request message for the session corresponding to the first session identifier. For example, the session is an SLPP session based on the SLPP protocol.

For example, the SLPP message includes at least one of an SLPP session creation request message, an SLPP session creation completion message, and an SLPP message carrying session content. After the session is established, the participants of the session may communicate based on the created session. The SLPP message may be sent based on the SLPP during communication. The SLPP message may include the session content.

In a case that the SLPP message is the session creation request message, the sender is the initiator of the session.

According to the SLPP message carrying the first session identifier, the session identifier of the session and the initiator of the session may be determined, so that the situation that the initiator of the session cannot be distinguished when a plurality of participants participate in the session, or the initiators determined by different participants of the same session are different may be reduced, thus improving the accuracy of information interaction during the session. Since the initiator of the session may be distinguished more accurately according to the first session identifier, the SLPP message carrying the first session identifier may be used for positioning, so as to improve the positioning accuracy.

In some embodiments, a numeric count of participants of the session indicated by the first session identifier is equal to or greater than three.

In some embodiments, the first session identifier includes a first (identifier) ID indicating the initiator of the session.

In the embodiment of the present disclosure, an ID in the first ID may be expressed as a UE ID. The first ID is a UE ID of the initiator.

The UE ID is used to distinguish different participants of the session. For example, the UE ID may be a unique identifier of the participant in the session. Therefore, different participants may determine the unique initiator according to the UE ID, which is conducive to improving the accuracy of information interaction in the session.

In a case that the first session identifier contains the first ID, a receiver of the SLPP message may know the initiator of the session identified by the first session identifier according to the first session identifier carried by the SLPP message.

In some embodiments, a part corresponding to a specified position of the first session identifier is the first ID. For example, the first ID may be a character string consisting of a plurality of characters which are continuously distributed starting from a start bit of the first session identifier. For another example, the first ID may be a character string consisting of a plurality of characters continuously distributed forward from a stop bit of the first session identifier. For still another example, the first ID may be a character string consisting of a plurality of characters continuously distributed starting from any intermediate bit in the first session identifier.

In conclusion, in the embodiment of the present disclosure, the character string composed of the first ID serves as a substring consisting of a plurality of continuously distributed characters in the first session identifier, which is convenient for the subsequent receiver to quickly decode.

In the same session, different participants have different UE IDs.

In different sessions, the UE ID of the same participant may be the same.

In some embodiments, the first session identifier further includes a second ID indicating the participant of the session.

For example, the second ID indicates a UE ID of the participant.

With the second ID, the receiver of the SLPP message may determine whether it is the participant of the session indicated by the first session identifier according to the first session identifier carried by the SLPP message. This SLPP message that specifies the participant of the session enables the sender of the SLPP message to select the participant of the session according to the needs of the session. For example, in the process of positioning with the SLPP message, some UEs have absolute position information, while others do not. When the session participant to be positioned needs to be positioned absolutely, the UE with absolute position information may be designated as the participant through the second ID.

In some embodiments, a part corresponding to a specified position of the first session identifier is the second ID. For example, the second ID may be a character string consisting of a plurality of characters continuously distributed starting from a start bit of the first session identifier. For another example, the second ID may be a character string consisting of a plurality of characters continuously distributed forward from a stop bit of the first session identifier. For still another example, the second ID may be a character string consisting of a plurality of characters continuously distributed starting from any intermediate bit in the first session identifier.

In conclusion, in the embodiment of the present disclosure, the character string composed of the second ID serves as a substring consisting of a plurality of continuously distributed characters in the first session identifier, which is convenient for the subsequent receiver to quickly decode.

For example, in a case that the first session identifier includes the first ID and the second ID, the first ID may be arranged in front of the second ID, so that the receiver may decode the first ID to determine the initiator more quickly.

The first session identifier may or may not include the second ID.

In some embodiments, the session is created in a broadcast mode, and the first session identifier includes the second ID.

In a case that the session is created in the broadcast mode, there may be many receivers of the SLPP message, and these receivers may determine whether they are the session participants identified by the SLPP message according to the second ID. In a case that a certain receiver determines that it is the participant of the session, it joins the session identified by the SLPP message. In a case that a certain receiver determines that it is not the participant of the session, it ignores the SLPP message.

For example, in a case that one or more nodes around the target UE are nodes with their own position information, these nodes may be used as anchor UEs. Therefore, the first session identifier carries the second ID to instruct the anchor UEs to serve as the participants, thus improve the efficiency and accuracy of positioning the target UE.

In some embodiments, the session is created in the broadcast mode, and the first session identifier does not include the second ID.

For example, in a case that the first session identifier does not carry the second ID, the receiver of the SLPP message may determine whether it is a participant of the session indicated by the first session identifier through a broadcast identifier.

This way of distinguishing participants through the broadcast identifier instead of the second ID is more suitable for scenarios with fewer participants.

In some embodiments, the broadcast identifier includes at least one of: a source layer 2 broadcast ID of the participant; a destination layer 2 broadcast ID of the participant; and an SLPP user equipment broadcast ID of the participant.

In some embodiments, a numeric count of the participant of the session is less than a specified threshold, and the first session identifier includes the second ID.

For example, the specified threshold is a small number such as three or four.

When the numeric count of the participant of the session is less than the specified threshold, the first session identifier includes the second ID, so that an appropriate UE may be selected as the participant for positioning, thus reducing the complexity of positioning and improving the efficiency and accuracy of positioning. For example, in a case that there are two participants in the session, namely a target UE-1 and an anchor UE-2, the target UE-1 as the sender indicates that the target UE-1 serves as the initiator of the session through the first ID, and indicates that the anchor UE-2 with known position information serves as the participant through the second ID. In this case, the absolute position of the target UE-1 may be determined by determining the distance (ranging) between the anchor UE-2 and the target UE-1 and the position information of the anchor UE-2.

In some embodiments, a participant other than the initiator of the session is a UE group, and the first session identifier includes a second ID, where the second ID is a group ID of the UE group.

Compared with a single UE, the UE group includes one or more UEs. With the session based on the UE group, multi-participant session and/or positioning may be realized when the UE group has multiple UEs. Using the UE group to position the initiator may improve the positioning accuracy, or the initiator may be used to position the UE group to improve the positioning efficiency.

In some embodiments, the session is created in a broadcast mode and the session creation request message includes a broadcast identifier, and the first session identifier does not include the second ID; and the broadcast identifier is an identifier of the broadcast creation request message commonly known to the participant.

For example, in a case that the first session identifier does not carry the second ID, the receiver of the SLPP message may determine whether it is the participant of the session indicated by the first session identifier through the broadcast identifier.

This way of distinguishing participants by the broadcast identifier instead of the second ID is more suitable for scenarios with fewer participants.

In some embodiments, the broadcast identifier includes at least one of: a source layer 2 broadcast ID of the initiator; a destination layer 2 broadcast ID of the initiator; an SLPP user equipment broadcast ID of the initiator; a serial number of a broadcast message of the initiator; a source layer 2 broadcast ID of the participant; a destination layer 2 broadcast ID of the participant; and an SLPP user equipment broadcast ID of the participant.

In some embodiments, the first session identifier further includes a session number; and session numbers of different sessions initiated by a same initiator are different, and/or session numbers of different sessions participated by a same participant are different.

For example, the session number may include the serial numbers of all sessions created by the initiator, or the serial number of the SLPP session created by the initiator. Therefore, different sessions may have different session numbers.

In some embodiments, different SLPP messages within the same session use the same session number.

In some embodiments, the first session identifier may include other compositions besides the first ID and the session number. For example, the first session identifier may also include one or more of the numeric count of the participant of the session identified by the first session identifier, a device type of the participant, a protocol version number of the SLPP protocol, and other related information.

In some embodiments, the participant includes the UE group, and the same participant means that the UE group ID and/or layer 2 group ID of the participant is the same.

For example, the layer 2 group ID includes a source layer 2 group ID and/or a destination layer 2 group ID.

In some embodiments, the first ID includes at least one of: a source layer 2 ID of the initiator; a destination layer 2 ID of the initiator; an application layer ID of the initiator; and an SLPP UE ID of the initiator.

In some embodiments, the second ID includes at least one of: a source layer 2 ID of the participant; a destination layer 2 ID of the participant; an application layer ID of the participant; and an SLPP user equipment (UE) ID of the participant.

In some embodiments, a participant other than the initiator is a UE group of the session, and the second ID includes at least one of: a group ID of the UE group; a source layer 2 group ID of the UE group; a destination layer 2 group ID of the UE group; an application layer group ID of the UE group; and an SLPP UE group ID of the UE group.

In the embodiment of the present disclosure, the participant being the UE group of the session includes the participant other than the initiator being the UE group of the session.

In some embodiments, a participant other than the initiator is a UE group of the session, and the second ID further includes at least one of: a source layer 2 ID in a source layer 2 ID list of the UE group; a destination layer 2 ID in a destination layer 2 ID list of the UE group; an application layer ID in an application layer ID list of the UE group; and an SLPP UE ID in an SLPP UE ID list of the UE group, where the participant is the participant of the session.

In some embodiments, a numeric count of participants involved in the session is larger than two, and the session has the first session identifier.

In a case that the session involves different UEs, that is, all the participants are UEs, a numeric count of UEs involved in the session is larger than two, and the session has the first session identifier.

According to the SLPP message carrying the first session identifier, it may be determined which of three or more participants is the initiator of the session, and thus the situation that the initiator of the session cannot be distinguished when a plurality of participants participate in the session, or the initiators determined by different participants of the same session are different may be reduced, thereby improving the accuracy of information interaction during the session. Since the initiator of the session may be distinguished more accurately according to the first session identifier, the SLPP message carrying the first session identifier may be used for positioning, so as to improve the positioning accuracy.

In some embodiments, a numeric count of participants involved in the session is less than or equal to two, and the session has a second session identifier; the second session identifier is configured to identify a second session; and type information and the second session identifier carried in the SLPP message are configured to determine the initiator of the session.

In a case that the session involves different UEs, that is, all the participants are UEs, a numeric count of UEs involved in the session is less than or equal to two, and the session has the second session identifier.

The type information includes a type of the UE.

For example, the type information includes two types, namely "client" and "server".

In a case that the session involves two UEs, the numeric count of participants in the session is small, and the two different UEs may be distinguished by the type information. For example, the "server" may be used to indicate that a server UE is the initiator, or the "client" may be used to indicate that a client UE is the initiator.

When the numeric count of participants in the session is two, the compatibility with related technologies may be improved by distinguishing the initiator of the session through the type information.

In some embodiments, in response to that the initiator of the session is a participant with set type information, the type information and the second session identifier carried in the SLPP message are used to determine the initiator of the session.

For a session with two or more participants, there may be only one specific type of participant. If this specific type of participant is the initiator of the session, the compatibility with related technologies may be improved by using specific type information to distinguish the initiator. For example, the participant with the set type information includes: a client-type participant. For example, the initiator of the session is the client UE, and the SLPP message carries the client-type information to indicate that the client UE is the initiator in the session.

As shown in Fig. 2B, an embodiment of the present disclosure provides an information processing method, which is performed by a sender, and includes the following step.

In step S1210, in response to determining to end a session, indication information is sent, where the indication information is configured to end the session.

For example, the sender may be an initiator of the session, and/or a participant other than the initiator of the session.

For example, the participant includes user equipment (UE) or a road side unit (RSU), etc.

In some embodiments, the initiator of the session may be a target UE that needs to be positioned, and the participant other than the initiator may be an anchor UE that provides positioning services.

In some embodiments, the initiator of the session may be an anchor UE, and another participant other than the initiator may be a target UE that needs to be positioned.

In some embodiments, all participants of the session are UEs. In some other embodiments, some participants of the session may include, but are not limited to, RSUs.

In some embodiments, the sender is the initiator of the session, and step S1210 includes that the initiator of the session sends the indication information to the participant other than the initiator.

In some embodiments, a numeric count of participants in the session is two. Even if multiple transactions are supported in one session, these transactions all involve these two participants, and thus any participant may know that the ending of the last transaction in the session means the ending of the session.

In some embodiments, in a case that a participant other than the initiator of the session is a group of UEs (that is, a UE group) and all transactions in the session involve this group of UEs, the initiator may determine that the session is ended after determining that the last transaction in the session is ended.

The participant other than the initiator of the session is one UE group, and all transactions in the session involve the initiator and the UE group. Even if multiple transactions are supported in one session, these transactions involve the initiator and the UE group, and thus any participant may know that the ending of the last transaction in the session means the ending of the session.

In some other embodiments, it is determined that the session is ended according to a session result. For example, in a case that the session result indicates that the initiator has obtained position estimation, it indicates that the session may be ended.

In some embodiments, a participant other than the initiator of the session is a UE group, and the initiator sends the indication information to the UE group.

In the embodiment of the present disclosure, the indication information may be used to end the session, or the session may be ended by itself without sending the indication information.

In a case that one session involves more than two participants, since the session involves multiple transactions and different transactions involve different participants, the participants cannot determine which transaction is the last transaction, and thus it is necessary to end the session by the indication information.

For example, the indication information is broadcast or multicast to the participants of the session.

For another example, after one participant receives the indication information, it forwards the indication information to other participants according to the transaction in which it participates, until all participants receive the indication information.

In a case that one session involves two participants, even if the session involves multiple transactions, these transactions involve the same two participants. Therefore, any participant knows which transaction is the last transaction, and thus, it is unnecessary to end the session by the indication information.

In a case that one session involves more than two participants, all the other participants other than the initiator belong to one UE group, and all the transactions of the session involve this UE group, the sender or the UE group may also know which transaction is the last transaction, and may end the session by itself after the last transaction is ended. There is no need to end the session by the indication information.

The transaction may be established between different participants in the same session. With the indication information, any participant in the session may know that the session may be ended, which realizes the accuracy of determining the ending of the session when three or more participants have a session.

In some embodiments, the SLPP message carrying session content carries the indication information.

For example, the last SLPP message of the session carries the indication information, and this SLPP message is originally used for the transmission of the session content. By carrying the indication information, after the transmission of this SLPP message is completed, all participants may end the session.

For example, the session content is carried in an SLPP message body, and the indication information is carried in a message header or a message body of the SLPP message. In a case that both the indication information and the session content are carried in the message body, the message body also includes a distinguishing mark, and the distinguishing mark is used to distinguish the indication information in a marked area from the session content.

For example, the indication information may be an end mark, for example, the end mark is "end session"; alternatively, the indication information is a bit sequence indicating the ending.

The SLPP message carries both the session content and the indication information, and there is no need to construct a special message to carry the indication information in addition to the SLPP message carrying the session content, so that the SLPP message is multiplexed with simple implementation.

In some embodiments, the SLPP message without session content carries the indication information.

Here, the SLPP message without the session content carries the indication information, which may be understood as indicating the ending of the session through a dedicated SLPP message.

For example, after the last SLPP message carrying the session content is transmitted, the SLPP message carrying the indication information is sent.

For example, the indication information may be an end mark, or the indication information may be a bit sequence indicating the ending.

For example, the indication information may be carried in the message header of the SLPP message or the message body of the SLPP message.

In some embodiments, the indication information may be carried by the SLPP message with the session content or by the SLPP message without the session content in a unicast, multicast or broadcast mode.

In some embodiments, the SLPP message carrying the indication information does not have an SLPP message body, and the SLPP message body is configured to carry the session content.

The message header of the SLPP message may be used to carry the indication information.

This SLPP message without the SLPP message body may shorten the length of the SLPP message and simplify decoding.

In some embodiments, the SLPP message carrying the indication information has an SLPP message body, the content of the SLPP message body is empty, or the SLPP message body carries the specified content. For example, the SLPP message body carries the session content.

As shown in Fig. 2C, an embodiment of the present disclosure provides an information processing method, which is performed by a sender, and includes the following step.

In step S1310, in response to obtaining a session result of a session, it is determined that the session is ended.

For example, the session result may be the purpose of establishing the session. For example, in a case that the purpose of establishing the session is to obtain position information, when the position information is obtained, the session result may be considered as obtained. For another example, in a case that the purpose of establishing the session is to deliver the message content, after the message content is sent to the receiver, the receiver may determine that the session is ended.

For example, for the scenario of absolute ranging and/or relative ranging, the session result may include whether the participant that needs to be positioned has obtained the position estimation. For example, the session result includes whether the initiator that needs to be positioned has obtained the position estimation.

The technical scheme provided by the embodiment of the present disclosure may be implemented in combination with the methods shown in Fig. 2A and/or Fig. 2B. That is, the session identifier of the session may be the first session identifier containing the first ID of the initiator. Alternatively, the session identifier of the session may be a part of the session identifier determined according to the numeric count of participants in the session.

In some embodiments, the method shown in Fig. 2C may be implemented independently, that is, without relying on any of the previous embodiments.

In some embodiments, it is determined that the session is ended in response to that the position estimation is obtained by the participant that needs to be positioned.

In some embodiments, it is determined that the session is not ended in response to that the position estimation is not obtained by the participant that needs to be positioned.

In some embodiments, after it is determined that the session is ended, the method further includes sending indication information, where the indication information is used to end the session.

A transaction may be established between different participants in the same session. With the indication information, any participant in the session may know that the session may be ended, which realizes the accuracy of determining the ending of the session when three or more participants have a session.

In some embodiments, the SLPP message carrying the session content carries the indication information.

For example, the last SLPP message of the session carries the indication information, and this SLPP message is originally used for the transmission of the session content. By carrying the indication information, after the transmission of this SLPP message is completed, all participants may end the session.

For example, the session content is carried in an SLPP message body, and the indication information is carried in a message header or a message body of the SLPP message. In a case that both the indication information and the session content are carried in the message body, the message body also includes a distinguishing mark, and the distinguishing mark is used to distinguish the indication information in a marked area from the session content.

For example, the indication information may be an end mark, for example, the end mark is "end session"; alternatively, the indication information is a bit sequence indicating the ending.

The SLPP message carries both the session content and the indication information, and there is no need to construct a special message to carry the indication information in addition to the SLPP message carrying the session content, so that the SLPP message is multiplexed with simple implementation.

In some embodiments, the SLPP message without session content carries the indication information.

Here, the SLPP message without the session content carries the indication information, which may be understood as indicating the ending of the session through a dedicated SLPP message.

For example, after the last SLPP message carrying the session content is transmitted, the SLPP message carrying the indication information is sent.

For example, the indication information may be an end mark, or the indication information may be a bit sequence indicating the ending.

For example, the indication information may be carried in the message header of the SLPP message or the message body of the SLPP message.

For example, the sender may be the initiator of the session, and/or the participant other than the sender in the session.

For example, the participant includes user equipment (UE) or a road side unit (RSU), etc.

In some embodiments, the initiator of the session may be a target UE that needs to be positioned, and the participant may be an anchor UE that provides positioning services.

In some embodiments, the initiator of the session may be an anchor UE, and another participant other than the initiator may be a target UE that needs to be positioned.

In some embodiments, all participants of the session are UEs.

In some embodiments, in a case that a numeric count of participants of the session is larger than two, or the participant of the session includes a UE group, it is determined that the session is ended in response to obtaining the session result of the session.

In some other embodiments, it is determined that the session is ended in response to that the last transaction involved in the session is ended.

For example, in a case that a numeric count of participants in the session is two, even if multiple transactions are supported in one session, these transactions all involve these two participants, and thus any participant may know that the ending of the last transaction in the session means the ending of the session.

For example, in a case that there are multiple participants in the session, all the multiple participants belong to the same UE group, and all transactions of the session involve this UE group, any participant may also know that the ending of the last transaction of the session means the ending of the session.

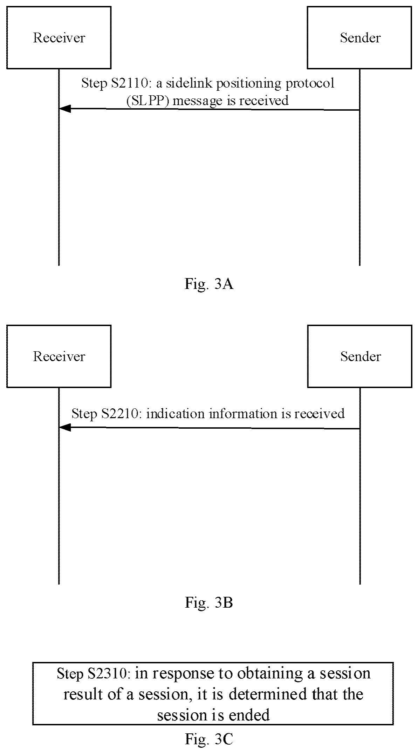

As shown in Fig. 3A, an embodiment of the present disclosure provides an information processing method, which is performed by a receiver, and includes the following step.

In step S2110, a sidelink positioning protocol (SLPP) message is received, where the SLPP message includes a first session identifier, and the first session identifier is configured to identify a session and determine an initiator of the session.

For example, the receiver may be the initiator of the session, and/or a participant other than the initiator of the session.

For example, the participant includes user equipment (UE) or a road side unit (RSU), etc.

In some embodiments, the initiator of the session may be a target UE that needs to be positioned, and the participant may be an anchor UE that provides positioning services.

In some embodiments, all participants of the session are UEs. In some other embodiments, some participants of the session may include, but are not limited to, RSUs.

In some embodiments, step S2110 includes that UE B receives the sidelink positioning protocol (SLPP) message sent by UE A. UE B may include one or more UEs.

In some embodiments, the SLPP message may be a message during session creation. For example, the SLPP message may include a session creation request message for the session corresponding to the first session identifier. For example, the session is an SLPP session based on the SLPP protocol.

For example, the SLPP message includes at least one of an SLPP session creation request message, an SLPP session creation completion message, and an SLPP message carrying session content. After the session is established, the participants of the session may communicate based on the created session. The SLPP message may be sent based on the SLPP during communication. The SLPP message may include the session content.

In a case that the SLPP message is the session creation request message, the sender is the initiator of the session.

According to the SLPP message carrying the first session identifier, the session identifier of the session and the initiator of the session may be determined, so that the situation that the initiator of the session cannot be distinguished when a plurality of participants participate in the session, or the initiators determined by different participants of the same session are different may be reduced, thus improving the accuracy of information interaction during the session. Since the initiator of the session may be distinguished more accurately according to the first session identifier, the SLPP message carrying the first session identifier may be used for positioning, so as to improve the positioning accuracy.

In some embodiments, a numeric count of participants of the session indicated by the first session identifier is equal to or greater than three.

In some embodiments, the first session identifier includes a first (identifier) ID indicating the initiator of the session.

In the embodiment of the present disclosure, an ID in the first ID may be expressed as a UE ID. The first ID is a UE ID of the initiator.

The UE ID is used to distinguish different participants of the session. That is, the UE ID may distinguish different participants.

For example, the UE ID may be a unique identifier of the participant in the session. Therefore, different participants may determine the unique initiator according to the UE ID, which is conducive to improving the accuracy of information interaction in the session.

In a case that the first session identifier contains the first ID, the receiver of the SLPP message may know the initiator of the session identified by the first session identifier according to the first session identifier carried by the SLPP message.

In some embodiments, a part corresponding to a specified position of the first session identifier is the first ID. For example, the first ID may be a character string consisting of a plurality of characters which are continuously distributed starting from a start bit of the first session identifier. For another example, the first ID may be a character string consisting of a plurality of characters continuously distributed forward from a stop bit of the first session identifier. For still another example, the first ID may be a character string consisting of a plurality of characters continuously distributed starting from any intermediate bit in the first session identifier.

In conclusion, in the embodiment of the present disclosure, the character string composed of the first ID serves as a substring consisting of a plurality of continuously distributed characters in the first session identifier, which is convenient for the subsequent receiver to quickly decode.

In the same session, different participants have different UE IDs.

In different sessions, the UE ID of the same participant may be the same.

In some embodiments, the first session identifier further includes a second ID indicating the participant of the session.

For example, the second ID indicates a UE ID of the participant.

With the second ID, the receiver of the SLPP message may determine whether it is the participant of the session indicated by the first session identifier according to the first session identifier carried by the SLPP message. This SLPP message that specifies the participant of the session enables the sender of the SLPP message to select the participant of the session according to the needs of positioning, so as to facilitate positioning. For example, some UEs have absolute position information, while others do not. When the session participant to be positioned needs to be positioned absolutely, the UE with absolute position information may be designated as the participant through the second ID.

In some embodiments, a part corresponding to a specified position of the first session identifier is the second ID. For example, the second ID may be a character string consisting of a plurality of characters continuously distributed starting from a start bit of the first session identifier. For another example, the second ID may be a character string consisting of a plurality of characters continuously distributed forward from a stop bit of the first session identifier. For still another example, the second ID may be a character string consisting of a plurality of characters continuously distributed starting from any intermediate bit in the first session identifier.

In conclusion, in the embodiment of the present disclosure, the character string composed of the second ID serves as a substring consisting of a plurality of continuously distributed characters in the first session identifier, which is convenient for the subsequent receiver to quickly decode.

For example, in a case that the first session identifier includes the first ID and the second ID, the first ID may be arranged in front of the second ID, so that the receiver may decode the first ID to determine the initiator more quickly.

The first session identifier may or may not include the second ID.

In some embodiments, the session is created in a broadcast mode, and the first session identifier includes the second ID.

In a case that the session is created in the broadcast mode, there may be many receivers of the SLPP message, and these receivers may determine whether they are the session participants identified by the SLPP message according to the second ID. In a case that a certain receiver determines that it is the participant of the session, it joins the session identified by the SLPP message. In a case that a certain receiver determines that it is not the participant of the session, it ignores the SLPP message.

For example, in a case that one or more nodes around the target UE are nodes with their own position information, these nodes may be used as anchor UEs. Therefore, the first session identifier carries the second ID to instruct the anchor UEs to serve as the participants, thus improve the efficiency and accuracy of positioning the target UE.

In some embodiments, the session is created in the broadcast mode, and the first session identifier does not include the second ID.

For example, in a case that the first session identifier does not carry the second ID, the receiver of the SLPP message may determine whether it is a participant of the session indicated by the first session identifier through a broadcast identifier.

This way of distinguishing participants through the broadcast identifier instead of the second ID is more suitable for scenarios with fewer participants.

In some embodiments, the broadcast identifier includes at least one of: a source layer 2 broadcast ID of the participant; a destination layer 2 broadcast ID of the participant; and an SLPP user equipment broadcast ID of the participant.

In some embodiments, a numeric count of the participant of the session is less than a specified threshold, and the first session identifier includes the second ID.

For example, the specified threshold is a small number such as three or four.

When the numeric count of the participant of the session is less than the specified threshold, the first session identifier includes the second ID, so that an appropriate UE may be selected as the participant for positioning, thus reducing the complexity of positioning and improving the efficiency and accuracy of positioning. For example, in a case that there are two participants in the session, namely a target UE-1 and an anchor UE-2, the target UE-1 as the sender indicates that the target UE-1 serves as the initiator of the session through the first ID, and indicates that the anchor UE-2 with known position information serves as the participant through the second ID. In this case, the absolute position of the target UE-1 may be determined by determining the distance (ranging) between the anchor UE-2 and the target UE-1 and the position information of the anchor UE-2.

In some embodiments, a participant other than the initiator of the session is a UE group, and the first session identifier includes a second ID, where the second ID is a group ID of the UE group.

Compared with a single UE, the UE group includes two or more UEs, so that the UE group includes more abundant position information. Using the UE group to position the initiator may improve the positioning accuracy, or the initiator may be used to position the UE group to improve the positioning efficiency.

In some embodiments, the session is created in a broadcast mode and the session creation request message includes a broadcast identifier, and the first session identifier does not include the second ID; and the broadcast identifier is an identifier of the broadcast creation request message commonly known to the initiator and the participant.

For example, in a case that the first session identifier does not carry the second ID, the receiver of the SLPP message may determine whether it is the participant of the session indicated by the first session identifier through the broadcast identifier.

This way of distinguishing participants by the broadcast identifier instead of the second ID is more suitable for scenarios with fewer participants.

In some embodiments, the broadcast identifier includes at least one of: a source layer 2 broadcast ID of the participant; a destination layer 2 broadcast ID of the participant; and an SLPP user equipment broadcast ID of the participant.

In some embodiments, the first session identifier further includes a session number; session numbers of different sessions initiated by a same initiator are different, and/or session numbers of different sessions participated by a same participant are different.

For example, the session number may include the serial numbers of all sessions created by the initiator, or the serial number of the SLPP session created by the initiator. Therefore, different sessions may have different session numbers.

In some embodiments, different SLPP messages within the same session use the same session number.

In some embodiments, the first session identifier may include other compositions besides the first ID and the session number. For example, the first session identifier may also include the numeric count of the participant of the session identified by the first session identifier, a device type of the participant, a protocol version number of the SLPP protocol, and other related information.

In some embodiments, the participant includes the UE group, and the same participant means that the UE group ID and/or layer 2 group ID of the participant is the same.

The Layer 2 group ID includes a source layer 2 group ID and/or a destination layer 2 group ID.

The first session identifier identifies the session by the session number.

In some embodiments, different SLPP messages within the same session use the same session number.

In some embodiments, the first ID includes at least one of: a source layer 2 ID of the initiator; a destination layer 2 ID of the initiator; an application layer ID of the initiator; and an SLPP user equipment (UE) ID of the initiator.

In some embodiments, the second ID includes at least one of: a source layer 2 ID of the participant; a destination layer 2 ID of the participant; an application layer ID of the participant; and an SLPP user equipment (UE) ID of the participant.

In some embodiments, a participant other than the initiator is a UE group of the session, and the second ID includes at least one of: a group ID of the UE group, where the participant is the participant of the session; a source layer 2 group ID of the UE group, where the participant is the participant of the session; a destination layer 2 group ID of the UE group, where the participant is the participant of the session; an application layer group ID of the UE group, where the participant is the participant of the session; and an SLPP UE group ID of the UE group, where the participant is the participant of the session.

In some embodiments, a participant other than the initiator is a UE group of the session, and the second ID further includes at least one of: a source layer 2 ID in a source layer 2 ID list of the UE group; a destination layer 2 ID in a destination layer 2 ID list of the UE group; an application layer ID in an application layer id list of the UE group; and an SLPP UE ID in an SLPP UE ID list of the UE group, where the participant is the participant of the session.

In some embodiments, a numeric count of participants involved in the session is larger than two, and the session has the first session identifier.

In a case that the session involves different UEs, that is, all the participants are UEs, a numeric count of UEs involved in the session is larger than two, and the session has the first session identifier.

According to the SLPP message carrying the first session identifier, it may be determined which of three or more participants is the initiator of the session, and thus the situation that the initiator of the session cannot be distinguished when a plurality of participants participate in the session, or the initiators determined by different participants of the same session are different may be reduced, thereby improving the accuracy of information interaction during the session. Since the initiator of the session may be distinguished more accurately according to the first session identifier, the SLPP message carrying the first session identifier may be used for positioning, so as to improve the positioning accuracy.

In some embodiments, a numeric count of participants involved in the session is less than or equal to two, and the session has a second session identifier; the second session identifier is configured to identify a second session; and type information and the second session identifier carried in the SLPP message are configured to determine the initiator of the session.

The type information includes a type of the UE.

For example, the type information includes two types, namely "client" and "server".

In a case that the session involves two UEs, the numeric count of participants in the session is small, and the two different UEs may be distinguished by the type information. For example, the "server" may be used to indicate that a server UE is the initiator, or the "client" may be used to indicate that a client UE is the initiator.

When the numeric count of participants in the session is two, the compatibility with related technologies may be improved by distinguishing the initiator of the session through the type information.

As shown in Fig. 3B, an embodiment of the present disclosure provides an information processing method, which is performed by a receiver, and includes the following step.

In step S2210, indication information is received, where the indication information is used to end a session.

For example, the receiver may be an initiator of the session, and/or a participant other than the initiator of the session.

For example, the participant includes user equipment (UE) or a road side unit (RSU), etc.

In some embodiments, the initiator of the session may be a target UE that needs to be positioned, and the participant may be an anchor UE that provides positioning services.

In some embodiments, all participants of the session are UEs. In some other embodiments, some participants of the session may include, but are not limited to, RSUs.

In some embodiments, the sender is the initiator of the session, and step S2210 includes that the initiator of the session sends the indication information to the participant other than the initiator.

In some embodiments, a numeric count of participants in the session is two. Even if multiple transactions are supported in one session, these transactions all involve these two participants, and thus any participant may know that the ending of the last transaction in the session means the ending of the session.

For example, in a case that there are multiple participants in the session, all the multiple participants belong to the same UE group, and all transactions of the session involve this UE group, the session is ended after the UE determines that the last transaction in the session is ended.

In some other embodiments, it is determined that the session is ended according to a session result. For example, in a case that the session result indicates that the participant that needs to be positioned has obtained position estimation, it indicates that the session may be ended.

In some embodiments, a participant other than the initiator of the session is a UE group, and the initiator sends the indication information to the UE group.

In the embodiment of the present disclosure, the indication information may be used to end the session, or the session may be ended by itself without sending the indication information.

A transaction may be established between different participants in the same session. With the indication information, any participant in the session may know that the session may be ended, which realizes the accuracy of determining the ending of the session when three or more participants have a session.

In some embodiments, the indication information is carried in the SLPP message containing session content.

For example, the last SLPP message of the session carries the indication information, and this SLPP message is originally used for the transmission of the session content. By carrying the indication information, after the transmission of this SLPP message is completed, all participants may end the session.

For example, the session content is carried in an SLPP message body, and the indication information is carried in a message header or a message body of the SLPP message. In a case that both the indication information and the session content are carried in the message body, the message body also includes a distinguishing mark, and the distinguishing mark is used to distinguish the indication information in a marked area from the session content.

For example, the indication information may be an end mark, for example, the end mark is "end session"; alternatively, the indication information is a bit sequence indicating the ending.

The SLPP message carries both the session content and the indication information, and there is no need to construct a special message to carry the indication information in addition to the SLPP message carrying the session content, so that the SLPP message is multiplexed with simple implementation.

In some embodiments, the indication information is carried in the SLPP message without session content.

Here, the SLPP message without the session content carries the indication information, which may be understood as indicating the ending of the session through a dedicated SLPP message.

For example, after the last SLPP message carrying the session content is transmitted, the SLPP message carrying the indication information is sent.

For example, the indication information may be an end mark, or the indication information may be a bit sequence indicating the ending.

For example, the indication information may be carried in the message header of the SLPP message or the message body of the SLPP message.

In some embodiments, the indication information may be carried by the SLPP message with the session content or by the SLPP message without the session content in a unicast, multicast or broadcast mode.

In some embodiments, the SLPP message carrying the indication information does not have an SLPP message body carrying the session content.

The message header of the SLPP message may be used to carry the indication information.

This SLPP message without the SLPP message body may shorten the length of the SLPP message and simplify decoding.

In some embodiments, the SLPP message carrying the indication information has an SLPP message body, the content of the SLPP message body is empty, or the SLPP message body carries the specified content. For example, the SLPP message body carries the session content.

As shown in Fig. 3C, an embodiment of the present disclosure provides an information processing method, which is performed by a receiver, and includes the following step.

In step S2310, in response to obtaining a session result of a session, it is determined that the session is ended.

For example, the session result may be the purpose of establishing the session. For example, in a case that the purpose of establishing the session is to obtain position information, when the position information is obtained, the session result may be considered as obtained. For another example, in a case that the purpose of establishing the session is to deliver the message content, after the message content is sent to the receiver, the receiver may determine that the session is ended.

For example, for the scenario of absolute ranging and/or relative ranging, the session result may include whether the participant that needs to be positioned has obtained the position estimation. For example, the session result includes whether the initiator that needs to be positioned has obtained the position estimation.

In some embodiments, it is determined that the session is ended in response to that the position estimation is obtained by the participant that needs to be positioned.

In some embodiments, it is determined that the session is not ended in response to that the position estimation is not obtained by the participant that needs to be positioned.

In some embodiments, after it is determined that the session is ended, the method further includes receiving indication information, where the indication information is used to end the session.

A transaction may be established between different participants in the same session. With the indication information, any participant in the session may know that the session may be ended, which realizes the accuracy of determining the ending of the session when three or more participants have a session.

In some embodiments, the SLPP message carrying session content carries the indication information.

The SLPP message carries both the session content and the indication information, and there is no need to construct a special message to carry the indication information in addition to the SLPP message carrying the session content, so that the SLPP message is multiplexed with simple implementation.

In some embodiments, the SLPP message without session content carries the indication information.

In the embodiment of the present disclosure, the indication information may be used to end the session, or the session may be ended by itself without sending the indication information.

For example, the receiver may be an initiator of the session, and/or a participant other than the initiator of the session.

For example, the participant includes user equipment (UE) or a road side unit (RSU), etc.

In some embodiments, the initiator of the session may be a target UE that needs to be positioned, and the participant other than the initiator may be an anchor UE that provides positioning services.

In some embodiments, all participants of the session are UEs.

In some embodiments, in a case that a numeric count of participants of the session is larger than two, or the participant other than the initiator of the session includes a UE group, it is determined that the session is ended in response to obtaining the session result of the session.

In some other embodiments, it is determined that the session is ended in response to that the last transaction involved in the session is ended.

For example, in a case that a numeric count of participants in the session is two, even if multiple transactions are supported in one session, these transactions all involve these two participants, and thus any participant may know that the ending of the last transaction in the session means the ending of the session.

For example, in a case that there are three or more participants in the session, all the participants belong to the same UE group, and all transactions of the session involve this UE group, the session is ended after the UE determines that the last transaction in the session is ended.

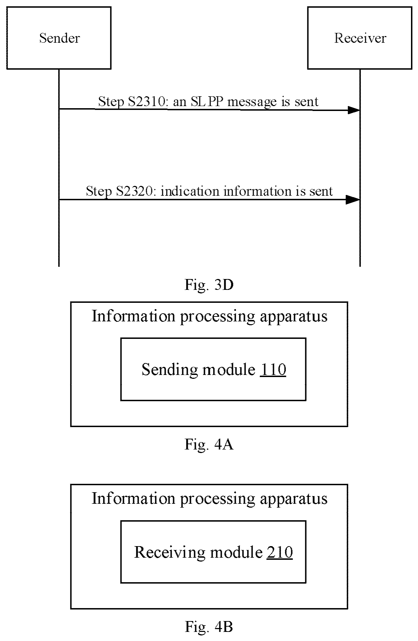

As shown in Fig. 3D, an embodiment of the present disclosure provides an information processing method, which includes the following steps.

In step S2310, UE A adds a session ID to a SLPP message sent to another UE, where the session ID at least includes a UE ID of an initiator of a session and a session number.

The session number includes the first session identifier of the aforementioned technical schemes.

In some embodiments, the SLPP messages in the same session adopt the same session number.

In some embodiments, in a case that the session involves only two UEs, the UE ID of the initiator may be indicated by a UE type, such as a server UE or a client UE.

In some embodiments, in a case that the initiator of the session is the server UE, the UE ID may be indicated by the UE type, that is, the server UE.

In some embodiments, the first SLPP message with a certain session ID received by the UE triggers the establishment of the session.

In some embodiments, the UE ID of the initiator of the session may be a source/destination layer 2 ID, application layer ID, or SLPP UE ID of the initiator.

In some embodiments, the session ID further includes an UE ID of a participant of the session.

In some embodiments, when the participant of the session is a UE, the UE ID of the participant of the session may be a source/destination layer 2 ID, application layer ID or SLPP UE ID of the participant.

In some embodiments, when the participant of the session is a group of UEs, the UE ID of the participant of the session may be a source/destination layer 2 group ID, application layer group ID, or SLPP group ID of the participant.

In some embodiments, when the participant of the session is a group of UEs, the UE ID of the participant of the session may be a source/destination layer 2 ID list of each participant, or an application layer ID list of each participant, or an SLPP UE ID list of each participant.

In some embodiments, when the session is created in a broadcast mode, the UE ID of the participant of the session may be a source/destination layer 2 broadcast ID, or an SLPP broadcast ID.

In some embodiments, only when the participant of the session is a UE or a group of UEs, the session ID carries the UE ID of the participant.

In some embodiments, in a case that the session is created in a broadcast mode, the session ID does not carry the UE ID of the participant.

In some embodiments, sessions with the same initiator and participant need to adopt different session numbers.

In some embodiments, for a session involving a group of UEs, the same participant means that the group ID or layer 2 group ID of the participant is the same.

In some embodiments, in a case that an SLPP session only involves two UEs, the session is ended after the last transaction in the session is ended.

In step S2320, in a case that an SLPP session involves a group of UEs, the initiator of the session sends a message for ending the session, for example, adding an ending session indication information to the SLPP message, or sending an SLPP message for ending the session.

In some embodiments, the SLPP message with the ending session indication information or the SLPP message for ending the session may be sent in a unicast or multicast or broadcast mode.

In some embodiments, the initiator of the session sends a message for ending the session when it is determined that the session may be ended. For example, when the initiator has obtained position estimation, it is determined that the session may be ended.

In some embodiments, the SLPP message for ending the session may or may not carry an SLPP message body.

In some embodiments, in a case that the SLPP session involves a group of UEs, and all transactions in the session involve this group of UEs, the session is ended after the UE determines that the last transaction in the session is ended.

As shown in Fig. 4A, an embodiment of the present disclosure provides an information processing apparatus, which includes a sending module 110.

The sending module 110 is configured to send a sidelink positioning protocol (SLPP) message, where the SLPP message includes a first session identifier, and the first session identifier is configured to identify a session and determine an initiator of the session.

In some embodiments, the information processing apparatus may include a sender.

The sender may be the initiator of the session, and/or a participant other than the initiator of the session.

A node may become the participant after participating in the session.

For example, the participant includes user equipment (UE) or a road side unit (RSU), etc.

In some embodiments, the initiator of the session may be a target UE that needs to be positioned, and the participant may be an anchor UE that provides positioning services.

In some embodiments, all participants of the session are UEs.

In some embodiments, the sending module 110 may be a program module, and the program module may realize the above operations after being executed by a processor.

In some other embodiments, the sending module 110 may be a software-hardware integrated module, and the software-hardware integrated module includes, but is not limited to, a programmable array.

In still some embodiments, the sending module 110 may be a pure hardware module, and the pure hardware module includes, but is not limited to, an application specific integrated circuit.

In some embodiments, the first session identifier includes a first (identifier) ID indicating the initiator of the session.

In some embodiments, the first session identifier further includes a second ID indicating the participant of the session.

The session is created in a broadcast mode, and the first session identifier includes a second ID; or, a numeric count of the participant of the session is less than a specified threshold, and the first session identifier includes a second ID; or, the participant other than the initiator of the session is a UE group, and the first session identifier includes a second ID, where the second ID is a group ID of the UE group.

In some embodiments, the session is created in a broadcast mode and a session creation request message includes a broadcast identifier, and the first session identifier does not include a second ID; and the broadcast identifier is an identifier of the broadcast creation request message commonly known to the participant.

In some embodiments, the first session identifier further includes a session number; and session numbers of different sessions initiated by a same initiator are different, and/or session numbers of different sessions participated by a same participant are different.

In some embodiments, the first ID includes at least one of: a source layer 2 ID of the initiator; a destination layer 2 ID of the initiator; an application layer ID of the initiator; and a SLPP user equipment (UE) ID of the initiator.

The second ID includes at least one of: a source Layer 2 ID of the participant; a destination layer 2 ID of the participant; an application layer ID of the participant; and an SLPP user equipment (UE) ID of the participant.

In some embodiments, the participant other than the initiator is a UE group of the session, and the second ID includes at least one of: a group ID of the UE group, where the participant is the participant of the session; a source layer 2 group ID of the UE group, where the participant is the participant of the session; a destination layer 2 group ID of the UE group, where the participant is the participant of the session; an application layer group ID of the UE group, where the participant is the participant of the session; and an SLPP UE group ID of the UE group, where the participant is the participant of the session.

In some embodiments, a numeric count of participants involved in the session is less than or equal to two, and the session has a second session identifier; the second session identifier is configured to identify a second session; and type information and the second session identifier carried in the SLPP message are configured to determine the initiator of the session.

In some embodiments, the sending module is further configured to perform: sending indication information in response to determining to end the session, where the indication information is configured to end the session.

In some embodiments, the SLPP message carrying session content carries the indication information.

In some embodiments, the SLPP message without session content carries the indication information.

In some embodiments, the SLPP message carrying the indication information does not have an SLPP message body; and the SLPP message body is configured to carry the session content.

In some embodiments, the sending module 110 is configured to perform at least one of: determining that the session is ended in response to that a last transaction involved in the session is ended; or determining that the session is ended in response to obtaining a session result of the session.

As shown in Fig. 4B, an embodiment of the present disclosure provides an information processing apparatus, which includes a receiving module 210.

The receiving module 210 is configured to receive a sidelink positioning protocol (SLPP) message, where the SLPP message includes a first session identifier, and the first session identifier is configured to identify a session and determine an initiator of the session.

In some embodiments, the information processing apparatus may include a receiver.

The receiver may be the initiator of the session, and/or a participant other than the initiator of the session.

A node may become the participant after participating in the session.

For example, the participant includes user equipment (UE) or a road side unit (RSU), etc.

In some embodiments, the initiator of the session may be a target UE that needs to be positioned, and the participant other than the initiator may be an anchor UE that provides positioning services.

In some embodiments, all participants of the session are UEs.

In some embodiments, the receiving module 210 may be a program module, and the program module may realize the above operations after being executed by a processor.

In some other embodiments, the receiving module 210 may be a software-hardware integrated module, and the software-hardware integrated module includes, but is not limited to, a programmable array.

In some embodiments, the receiving module 210 may be a pure hardware module; The pure hardware module includes but is not limited to an application specific integrated circuit.

In some embodiments, the first session identifier includes a first (identifier) ID indicating the initiator of the session.

The first session identifier further includes: a second ID indicating the participant other than the initiator of the session.

In some embodiments, the session is created in a broadcast mode, and the first session identifier includes a second ID; or, a numeric count of the participant of the session is less than a first threshold, and the first session identifier includes a second ID; or, the participant other than the initiator of the session is a UE group, and the first session identifier includes a second ID, where the second ID is a group ID of the UE group.

In some embodiments, the session is created in a broadcast mode and a session creation request message includes a broadcast identifier, and the first session identifier does not include a second ID, where the broadcast identifier is an identifier of the broadcast creation request message commonly known to the initiator and the participant.

In some embodiments, the first session identifier further includes a session number; and session numbers of different sessions initiated by a same initiator are different, and/or session numbers of different sessions participated by a same participant are different.

In some embodiments, the first ID includes at least one of:
a source layer 2 ID of the initiator;
a destination layer 2 ID of the initiator;
an application layer ID of the initiator; and
an SLPP user equipment (UE) ID of the initiator.

In some embodiments, the second ID includes at least one of:
a source layer 2 ID of the participant;
a destination layer 2 ID of the participant;
an application layer ID of the participant; and
an SLPP user equipment (UE) ID of the participant.

In some embodiments, the participant other than the initiator is a UE group of the session, and the second ID includes at least one of: a group ID of the UE group, where the participant is the participant of the session; a source layer 2 group ID of the UE group, where the participant is the participant of the session; a destination layer 2 group ID of the UE group, where the participant is the participant of the session; an application layer group ID of the UE group, where the participant is the participant of the session; and an SLPP UE group ID of the UE group, where the participant is the participant of the session.

In some embodiments, a numeric count of UEs involved in the session is larger than two, and the session has the first session identifier.

In some embodiments, a numeric count of UEs involved in the session is less than or equal to two, and the session has a second session identifier, where the second session identifier is configured to identify a second session; and type information and the second session identifier carried in the SLPP message are configured to determine the initiator of the session.

In some embodiments, the method includes: receiving instruction information, where the instruction information is configured to end the session.

In some embodiments, the indication information is carried in the SLPP message containing session content.

In some embodiments, the indication information is carried in the SLPP message without session content.

In some embodiments, the SLPP message carrying the indication information does not have an SLPP message body carrying the session content.

In some embodiments, the method further includes one of: determining that the session is ended in response to that a last transaction involved in the session is ended; and determining that the session is ended in response to obtaining a session result of the session.

An embodiment of the present disclosure provides a communication device, which includes a memory and a processor.

The memory is configured to store instructions executable by the processor.

The processor is connected with the memory.

The processor is configured to perform the information processing method provided by any of the foregoing technical schemes.

The processor may include various types of storage media, which are non-transitory computer storage media, and may continue to remember the information stored thereon after power failure of the communication device.

Here, the communication device includes a UE and/or a network device.

The processor may be connected to the memory through a bus or the like, for reading an executable program stored in the memory, so as to perform any the information processing methods according to the above embodiments of the present disclosure, for example, at least one of the methods shown in Figs. 2A to 3D.

An embodiment of the present disclosure provides a computer storage medium, in which an executable program is stored. After the executable program is executed by a processor, the information processing method provided by any of the above technical schemes may be performed.

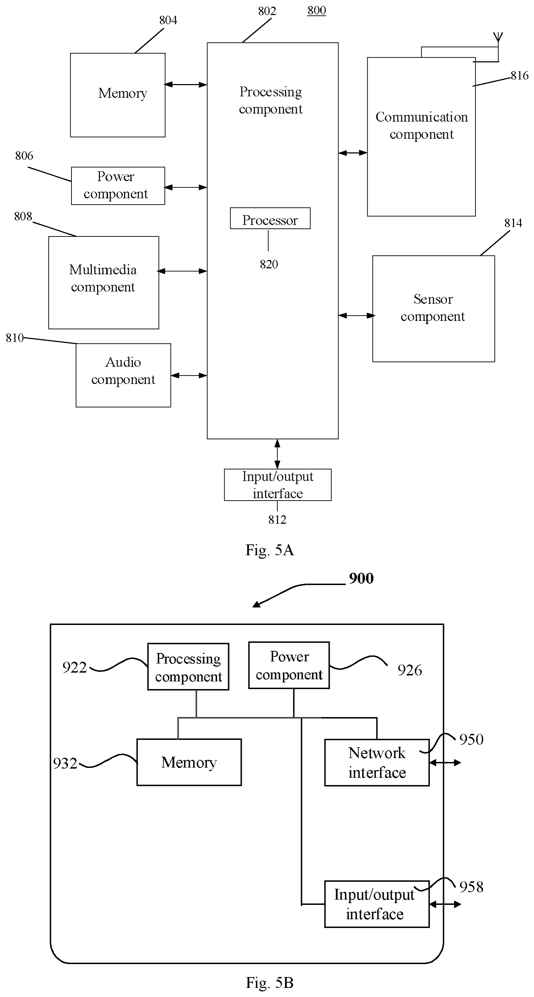

Fig. 5A is a block diagram of a terminal 800 according to an illustrative embodiment. For example, the terminal 800 may be a mobile phone, a computer, a digital broadcast user device, a messaging device, a game console, a tablet device, a medical device, a fitness device, a personal digital assistant, and the like.

Referring to Fig. 5A, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, telephone call, data communication, camera operation and recording operation. The processing component 802 may include one or more processors 820 to execute instructions to generate all or part of the steps of the methods described above. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the terminal 800. Examples of these data include instructions for any application or method operating on the terminal 800, contact data, phone book data, messages, pictures, videos, and the like. The memory 804 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the terminal 800. The power component 806 may include a power management system, one or more power supplies, and other components associated with generating, managing and distributing power for the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive an input signal from the user. The touch panel includes one or more touch sensors to sense touch, sliding and gestures on the touch panel. The touch sensor may not only sense the boundary of the touch or sliding action, but also detect the duration and pressure related to the touch or sliding operation. In some embodiments, the multimedia component 808 includes a front camera and/or a rear camera. When the terminal 800 is in an operation mode, such as a shooting mode or a video mode, the front camera and/or the rear camera may receive external multimedia data. Each front camera and rear camera may be a fixed optical lens system or have a focal length and an optical zoom capability.

The audio component 810 is configured to output and/or input audio signals. For example, the audio component 810 includes a microphone (MIC) configured to receive external audio signals when the terminal 800 is in an operation mode, such as a call mode, a recording mode and a voice recognition mode. The received audio signal may be further stored in the memory 804 or transmitted via the communication component 816. In some embodiments, the audio component 810 further includes a speaker for outputting audio signals.

The I/O interface 812 provides an interface between the processing component 802 and peripheral interface modules, which may be keyboards, click wheels, buttons, etc. These buttons may include, but are not limited to, a home button, a volume button, a start button and a lock button.

The sensor component 814 includes one or more sensors for providing the terminal 800 with various aspects of state evaluation. For example, the sensor component 814 may detect the on/off state of the terminal 800, the relative positioning of components, such as the display and keypad of the terminal 800, the position change of the terminal 800 or a component of the terminal 800, the presence or absence of contact between the user and the terminal 800, the orientation or acceleration/deceleration of the terminal 800 and the temperature change of the terminal 800. The sensor component 814 may include a proximity sensor configured to detect the presence of a nearby object without any physical contact. The sensor component 814 may also include an optical sensor, such as a CMOS or CCD image sensor, for use in imaging applications. In some embodiments, the sensor component 814 may further include an acceleration sensor, a gyro sensor, a magnetic sensor, a pressure sensor or a temperature sensor.

The communication component 816 is configured to facilitate wired or wireless communication between the terminal 800 and other devices. The terminal 800 may access a wireless network based on communication standards, such as WiFi, 2G or 3G, or a combination thereof. In an illustrative embodiment, the communication component 816 receives a broadcast signal or broadcast related information from an external broadcast management system via a broadcast channel. In an illustrative embodiment, the communication component 816 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology and other technologies.

In an illustrative embodiment, the terminal 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for performing the above methods.

In an illustrative embodiment, there is also provided a non-transitory computer-readable storage medium including instructions, such as the memory 804 including instructions, which may be executed by the processor 820 of the terminal 800 to generate the above methods. For example, the non-transitory computer-readable storage medium may be a ROM, a random access memory (RAM), a CD-ROM, a magnetic tape, a floppy disk and an optical data storage device.

As shown in Fig. 5B, an embodiment of the present disclosure provides a network device 900. For example, the network device 900 may be provided as a network-side device. The communication device may include various network elements such as the aforementioned access network elements and/or network functions.

Referring to Fig. 5B, the network device 900 includes a processing component 922, which further includes one or more processors, and memory resources represented by a memory 932 for storing instructions, such as application programs, executable by the processing component 922. The application program stored in the memory 932 may include one or more modules each corresponding to a set of instructions. In addition, the processing component 922 is configured to execute the instructions to perform any of the above methods applied to the access device, for example, the method shown in any one of Figs. 2A to 2C and/or 3A to 3D.

The network device 900 may further include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server TM, Mac OS XTM, UnixTM, LinuxTM, FreeBSDTM or the like. In the case of no contradiction, each step in a certain implementation or embodiment may be implemented as an independent embodiment, and the steps may be arbitrarily combined. For example, the scheme after removing some steps in a certain implementation or embodiment may also be implemented as an independent embodiment, and the order of respective steps in a certain implementation or embodiment may be arbitrarily exchanged. In addition, optional ways or alternatives in a certain implementation or embodiment may be arbitrarily combined. In addition, various implementations or embodiments may be arbitrarily combined, for example, some or all steps of different implementations or embodiments may be arbitrarily combined, and a certain implementation or embodiment may be arbitrarily combined with optional ways or alternatives of other implementations or embodiments.

Those skilled in the art will easily think of other implementations of the embodiments of the present disclosure after considering the specification and practicing the invention disclosed herein. The present disclosure is intended to cover any variations, uses or adaptations of the embodiments of the present disclosure, which follow the general principles of the embodiments of the present disclosure and include common sense or common technical means in the related art that are not disclosed in the present disclosure. The specification and examples are to be regarded as illustrative only, with the true scope and spirit of the embodiments of the present disclosure being indicated by the following claims.

It should be understood that the embodiments of the present disclosure are not limited to the precise structures that have been described above and shown in the accompanying drawings, and various modifications and changes may be made without departing from the scope of the present disclosure. The scope of the embodiments of the present disclosure is limited only by the append claims.

## Claims

1. An information processing method, performed by a sender, and comprising:
sending a sidelink positioning protocol (SLPP) message, wherein the SLPP message comprises a first session identifier, and the first session identifier is configured to identify a session and determine an initiator of the session.

2. The method according to claim 1, wherein the first session identifier comprises:
a first identifier (ID) indicating the initiator of the session.

3. The method according to claim 1 or 2, wherein the first session identifier further comprises:
a second ID indicating a participant of the session.

4. The method according to claim 3, wherein,
the session is created in a broadcast mode, and the first session identifier comprises the second ID;
or,
a numeric count of the participant of the session is less than a specified threshold, and the first session identifier comprises the second ID;
or,
the participant of the session is a UE group, and the first session identifier comprises the second ID, wherein the second ID is a group ID of the UE group.

5. The method according to claim 3, wherein the session is created in a broadcast mode and a creation request message of the session comprises a broadcast identifier, and the first session identifier does not comprise the second ID; and
the broadcast identifier is an identifier of a broadcast creation request message commonly known to the participant.

6. The method according to any one of claims 1 to 5, wherein the first session identifier further comprises a session number; and
session numbers of different sessions initiated by a same initiator are different, and/or session numbers of different sessions participated by a same participant are different.

7. The method according to claim 2, wherein the first ID comprises at least one of:
a source layer 2 ID of the initiator;
a destination layer 2 ID of the initiator;
an application layer ID of the initiator; or
an SLPP user equipment (UE) ID of the initiator.

8. The method according to claim 3, wherein the second ID comprises at least one of:
a source layer 2 ID of the participant;
a destination layer 2 ID of the participant;
an application layer ID of the participant; or
an SLPP user equipment (UE) ID of the participant.

9. The method according to claim 3, wherein the participant is a UE group of the session, and the second ID comprises at least one of:
a group ID of the UE group, wherein the participant is the participant of the session;
a source layer 2 group ID of the UE group, wherein the participant is the participant of the session;
a destination layer 2 group ID of the UE group, wherein the participant is the participant of the session;
an application layer group ID of the UE group, wherein the participant is the participant of the session; and
an SLPP UE group ID of the UE group, wherein the participant is the participant of the session.

10. The method according to any one of claims 1 to 8, wherein a numeric count of participants involved in the session is larger than two, and the session has the first session identifier.

11. The method according to any one of claims 1 to 8, wherein a numeric count of participants involved in the session is less than or equal to two, and the session has a second session identifier;
the second session identifier is configured to identify a second session; and
type information and the second session identifier carried in the SLPP message are configured to determine the initiator of the session.

12. The method according to any one of claims 1 to 11, further comprising:
sending indication information in response to determining to end the session, wherein the indication information is configured to end the session.

13. The method according to claim 12, wherein the SLPP message carrying session content carries the indication information.

14. The method according to claim 12, wherein the SLPP message without session content carries the indication information.

15. The method according to claim 13, wherein the SLPP message carrying the indication information does not have an SLPP message body, and the SLPP message body is configured to carry the session content.

16. The method according to any one of claims 1 to 15, further comprising one of:
determining that the session is ended in response to that a last transaction involved in the session is ended; and
determining that the session is ended in response to obtaining a session result of the session.

17. An information processing method, performed by a receiver, and comprising:
receiving a sidelink positioning protocol (SLPP) message, wherein the SLPP message comprises a first session identifier, and the first session identifier is configured to identify a session and determine an initiator of the session.

18. The method according to claim 17, wherein the first session identifier comprises:
a first identifier (ID) indicating the initiator of the session.

19. The method according to claim 17 or 18, wherein the first session identifier further comprises:
a second ID indicating a participant of the session.

20. The method according to claim 19, wherein,
the session is created in a broadcast mode, and the first session identifier comprises the second ID;
or,
a numeric count of the participant of the session is less than a first threshold, and the first session identifier comprises the second ID;
or,
the participant of the session is a UE group, and the first session identifier comprises the second ID, wherein the second ID is a group ID of the UE group.

21. The method according to claim 19, wherein the session is created in a broadcast mode and a creation request message of the session comprises a broadcast identifier, and the first session identifier does not comprise the second ID, wherein the broadcast identifier is an identifier of a broadcast creation request message commonly known to the initiator and the participant.

22. The method according to any one of claims 17 to 21, wherein the first session identifier further comprises a session number; and
session numbers of different sessions initiated by a same initiator are different, and/or session numbers of different sessions participated by a same participant are different.

23. The method according to claim 18, wherein the first ID comprises at least one of:
a source layer 2 ID of the initiator;
a destination layer 2 ID of the initiator;
an application layer ID of the initiator; or
an SLPP user equipment (UE) ID of the initiator.

24. The method according to claim 20, wherein the second ID comprises at least one of:
a source layer 2 ID of the participant;
a destination layer 2 ID of the participant;
an application layer ID of the participant; or
an SLPP user equipment (UE) ID of the participant.

25. The method according to claim 20, wherein the participant is a UE group of the session, and the second ID comprises at least one of:
a group ID of the UE group, wherein the participant is the participant of the session;
a source layer 2 group ID of the UE group, wherein the participant is the participant of the session;
a destination layer 2 group ID of the UE group, wherein the participant is the participant of the session;
an application layer group ID of the UE group, wherein the participant is the participant of the session; or
an SLPP UE group ID of the UE group, wherein the participant is the participant of the session.

26. The method according to any one of claims 17 to 24, wherein a numeric count of participants involved in the session is larger than two, and the session has the first session identifier.

27. The method according to any one of claims 17 to 24, wherein a numeric count of participants involved in the session is less than or equal to two, and the session has a second session identifier,
wherein the second session identifier is configured to identify a second session; and
type information and the second session identifier carried in the SLPP message are configured to determine the initiator of the session.

28. The method according to any one of claims 17 to 27, comprising:
receiving indication information, wherein the indication information is configured to end the session.

29. The method according to claim 28, wherein the indication information is carried in the SLPP message containing session content.

30. The method according to claim 28, wherein the indication information is carried in the SLPP message without session content.

31. The method according to claim 28, wherein the SLPP message carrying the indication information does not have an SLPP message body carrying session content.

32. The method according to any one of claims 17 to 31, further comprising one of:
determining that the session is ended in response to that a last transaction involved in the session is ended; and
determining that the session is ended in response to obtaining a session result of the session.

33. An information processing apparatus, comprising:
a sending module configured to send a sidelink positioning protocol (SLPP) message, wherein the SLPP message comprises a first session identifier, and the first session identifier is configured to identify a session and determine an initiator of the session.

34. An information processing apparatus, comprising:
a receiving module configured to receive a sidelink positioning protocol (SLPP) message, wherein the SLPP message comprises a first session identifier, and the first session identifier is configured to identify a session and determine an initiator of the session.

35. A communication device, comprising a processor, a transceiver, a memory and an executable program stored in the memory and configured to be executed by the processor, wherein the processor is configured to perform the information processing method according to any one of claims 1 to 16 or any one of claims 17 to 32 when executing the executable program.

36. A computer storage medium, for storing an executable program which, when executed by a processor, is configured to cause the processor to perform the information processing method according to any one of claims 1 to 16 or any one of claims 17 to 32.
